(19) Europäisches Patentamt
European Patent Office
Office européen des brevets

(11) **EP 4 635 814 A1**

(12) **EUROPÄISCHE PATENTANMELDUNG**

(43) Veröffentlichungstag:
**22.10.2025 Patentblatt 2025/43**

(21) Anmeldenummer: **25167609.4**

(22) Anmeldetag: **01.04.2025**

(51) Internationale Patentklassifikation (IPC):
**B60W 30/095** (2012.01)  **B60W 50/14** (2020.01)

(52) Gemeinsame Patentklassifikation (CPC):
**B60W 30/095; B60W 50/14;** B60W 2300/14;
B60W 2520/06; B60W 2520/10; B60W 2520/105;
B60W 2540/18; B60W 2554/4041;
B60W 2554/4042; B60W 2554/4044;
B60W 2554/801; B60W 2554/802; B60W 2556/50;
B60W 2710/207; B60W 2720/106

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **15.04.2024 DE 102024203425**

(71) Anmelder: **Continental Automotive Technologies
GmbH
30175 Hannover (DE)**

(72) Erfinder:
• Schuster, Peter
30175 Hannover (DE)
• Wehler, Sebastian
30175 Hannover (DE)

(74) Vertreter: **Aumovio Corporation
Continental Automotive
Technologies GmbH
Putzbrunner Straße 69
81739 München (DE)**

(54) **KOLLISIONSWARNVORRICHTUNG, FAHRZEUG UMFASSEND EINE KOLLISIONSWARNVORRICHTUNG, VERFAHREN ZUM BETREIBEN EINER KOLLISIONSWARNVORRICHTUNG, COMPUTERPROGRAMM UND COMPUTERLESBARES MEDIUM**

(57) Die Erfindung betrifft ein Kollisionswarnvorrichtung (3), wobei die Kollisionswarnvorrichtung (3) eine Steuereinrichtung (4) umfasst.

Die Erfindung sieht vor, dass die Steuereinrichtung (4) dazu eingerichtet ist, bei einer Erfüllung des Relevanzkriteriums, für die Steuerwerte des vorgegebenen Steuerwertebereichs, jeweilige Kollisionswerte des Kollisionsparameters, betreffend ein prognostiziertes Kollisionsereignis zwischen dem Anhänger (7) und dem jeweiligen zumindest einen Objekt (5) zu ermitteln, basierend auf den jeweiligen Kollisionswerten des Kollisionsparameters für den Steuerwertebereich eine Einschlagfunktion (10) in Bezug auf den Anhänger (7) für das jeweilige zumindest eine Objekt (5) zu ermitteln, welche den Steuerwerten des Steuerwertebereichs einen Einschlagswert betreffend das prognostizierte Kollisionsereignis zwischen dem Anhänger (7) und dem jeweiligen zumindest einen Objekt (5) zuweist, aus der jeweiligen Einschlagfunktion (10) in Bezug auf das Fahrzeug (1) des zumindest einen Objekts (5) und der jeweiligen Einschlagfunktion (10) in Bezug auf den Anhänger (7) des zumindest einen Objekts (5) die Gesamteinschlagfunktion (11) des Fahrzeuggespanns (2) zu ermitteln.

Fig.1

EP 4 635 814 A1

**Beschreibung**

Die Erfindung betrifft eine Kollisionswarnvorrichtung, ein Fahrzeug umfassend eine Kollisionswarnvorrichtung sowie ein Verfahren zum Betreiben einer Kollisionswarnvorrichtung. Die Erfindung betrifft auch ein Computerprogramm und ein computerlesbares Medium.

Um Kollisionen eines Fahrzeugs im Straßenverkehr zu vermeiden, wurden Kollisionswarnvorrichtungen entwickelt, die im Fahrzeug angeordnet sind. Kollisionswarnvorrichtungen sind Fahrerassistenzsysteme, die dazu eingerichtet sind, zumindest einen Bereich einer Fahrzeugumgebung eines Fahrzeugs oder eines Fahrzeuggespanns zu überwachen. Befindet sich in der Fahrzeugumgebung ein Objekt für welches ein Kollisionsereignis mit dem Fahrzeug prognostiziert wird, wird durch die Kollisionswarnvorrichtung des Fahrzeugs in der Regel ein Signal ausgegeben, um einen Fahrer des Fahrzeugs auf ein mögliches Kollisionsereignis hinzuweisen. Dem Fahrer kann dadurch die Möglichkeit gegeben werden, die Steuerung des Fahrzeugs anzupassen um die Kollision zu vermeiden oder um einen Schweregrad der Kollision zumindest zu senken. Die Kollisionswarnvorrichtungen können beispielsweise Abbiegeassistenten zum Erfassen eines Fahrradfahrers in einem toten Winkel eines Fahrzeuggespanns umfassen. Höher entwickelte Kollisionswarnvorrichtungen sind dazu eingerichtet, aktiv in die Fahrzeugführung einzugreifen.

Gesetzliche Regelungen zu diesen Vorrichtungen sind beispielsweise in der Verordnung (EU) 2019/2144 des Europäischen Parlaments und des Rates offenbart.

Bei den höher entwickelten Kollisionswarnvorrichtungen ist es üblich, Kollisionen des Fahrzeugs mit dem Objekt in der Umgebung des Fahrzeugs durch ein fortlaufendes inkrementiertes prognostizieren der Positionen des Fahrzeugs und des Objektes, verbunden mit einer Überprüfung auf geometrische Überlappungen zu prognostizieren. Zur Vermeidung der prognostizierten Kollision werden regelbasierte Ansätze angewandt, welche eine Bereitstellung von Steuerwerten für Steuerparameter des Fahrzeugs gemäß einer Kollisionsvermeidungsstrategie bereitstellen. Die bekannten aktuellen Ansätze zur Ermittlung der Steuerwerte sind mit einem relativ hohen Berechnungsaufwand verbunden, und die für Kollisionsvermeidungsstrategien verwendeten Regelsätze sind möglicherweise nicht umfassend oder optimal.

Ein beispielhaftes Verfahren sowie ein System zur Kollisionsvermeidung nach dem Stand der Technik sind in der US 2008/0065328A1 offenbart. Das Verfahren umfasst ein Empfangen von Eingangsdaten, die sich auf einen Satz von Objekten außerhalb des Host-Fahrzeugs beziehen, wobei eine Objektposition und eine Objektgeschwindigkeit mit jedem Objekt durch ein Sensorsystem, das auf einem Host-Fahrzeug angeordnet ist, assoziiert werden. In einem weiteren Schritt erfolgt ein Schätzen zukünftiger Trajektorien jedes externen Objekts, während ein Einfluss durch die zukünftigen Trajektorien der anderen externen Objekte berücksichtigt wird.

Es ist eine Aufgabe der Erfindung, einen Berechnungsaufwand zur Bereitstellung einer Kollisionsvermeidungsstrategie zu reduzieren.

Die Aufgabe wird durch die Gegenstände der unabhängigen Patentansprüche gelöst. Vorteilhafte Weiterentwicklungen der Erfindung sind durch die abhängigen Patentansprüche, die folgende Beschreibung sowie die Figuren beschrieben.

Ein erster Aspekt Erfindung betrifft eine Kollisionswarnvorrichtung, wobei die Kollisionswarnvorrichtung eine Steuereinrichtung umfasst. Die Kollisionswarnvorrichtung kann beispielsweise zur Anordnung in einem Fahrzeug oder einem Infrastrukturelement vorgesehen sein, um ein Kollisionsereignis zu prognostizieren. Als das Kollisionsereignis kann beispielsweise eine Kollision zwischen dem Fahrzeug und einem Objekt definiert sein. Das Objekt kann beispielsweise ein Verkehrsteilnehmer, wie beispielsweise ein weiteres Fahrzeug, ein Radfahrer oder ein Fußgänger sein. Das Objekt kann auch ein stationäres Objekt, wie beispielsweise ein Verkehrsschild, eine Ampel oder eine Straßenbegrenzung sein.

Die Kollisionswarnvorrichtung umfasst eine Steuereinrichtung, welche beispielsweise einen Mikroprozessor oder einen Mikrocontroller umfassen kann.

Die Steuereinrichtung ist dazu eingerichtet, Fahrzeugbewegungsdaten, die eine Bewegung des Fahrzeugs eines Fahrzeuggespanns beschreiben, zu empfangen. Die Fahrzeugbewegungsdaten können beispielsweise eine Geschwindigkeit, eine Position und/oder eine räumliche Ausrichtung des Fahrzeugs beschreiben.

Die Steuereinrichtung ist dazu eingerichtet, Objektbewegungsdaten zumindest eines Objekts in einer Umgebung des Fahrzeuggespanns die eine Bewegung des zumindest einen Objektes beschreiben, zu empfangen. Die Objektbewegungsdaten können ebenfalls eine Geschwindigkeit, eine Position und oder eine räumliche Ausrichtung des Objektes beschreiben.

Es ist vorgesehen, dass die Steuereinrichtung dazu eingerichtet ist, basierend auf den Fahrzeugbewegungsdaten eine Bewegungsgleichung zur Beschreibung der Bewegung des Fahrzeugs in Abhängigkeit von einer Zeit und einem aktuellen Steuerwert eines Steuerparameters des Fahrzeugs zu ermitteln. Der aktuelle Steuerwert des Steuerparameters des Fahrzeugs kann beispielsweise durch eine Steuereinrichtung des Fahrzeugs bereitgestellt sein. Die Bewegungsgleichung kann eine Prognose einer Trajektorie der Bewegung des Fahrzeugs in einem zukünftigen Zeitfenster ermöglichen. Das Zeitfenster kann beispielsweise 10 Sekunden betragen.

Mit anderen Worten ist die Steuereinrichtung dazu eingerichtet, aus den Fahrzeugbewegungsdaten und dem aktuellen Steuerwert des Steuerparameters des Fahrzeugs die Bewegungsgleichung zu ermitteln. Die Bewegungsgleichung ermöglicht eine Prognose einer Fahrzeugbewegung des Fahrzeugs in Abhängigkeit von der Zeit. Dabei wird die Bewegungsgleichung unter der Annahme der Beibehaltung des aktuellen Steuerwerts des Steuerparameters des Fahrzeugs ermitteln. Der Steuerparameter kann beispielsweise eine aktuelle Beschleunigung des Fahrzeugs und/oder einen aktuellen Lenkwinkel des Fahrzeugs umfassen. Die Bewegungsgleichung kann eine Ermittlung der Trajektorie des Fahrzeugs über den bestimmten Zeitraum ermöglichen.

Die Steuereinrichtung ist dazu eingerichtet, basierend auf den Objektbewegungsdaten des zumindest einen Objektes und den Fahrzeugbewegungsdaten des Fahrzeugs eine Bewegungsgleichung zur Beschreibung der Bewegung des jeweiligen zumindest einen Objektes in Bezug auf das Fahrzeug in Abhängigkeit von der Zeit und dem aktuellen Steuerwert des Steuerparameters des Fahrzeugs zu ermitteln. Mit anderen Worten ist die Steuereinrichtung dazu eingerichtet, die Bewegungsgleichung zur Beschreibung der Bewegung des Objektes zu ermitteln. Die Steuereinrichtung ist dazu eingerichtet, aus der Bewegungsgleichung zur Beschreibung der Bewegung des Objektes in einem globalen Referenzsystem und der Bewegungsgleichung zur Beschreibung der Bewegung des Fahrzeugs in dem globalen Referenzsystem, die Bewegungsgleichung zur Beschreibung der Bewegung des jeweiligen zumindest einen Objektes in Bezug auf das Fahrzeug in Abhängigkeit von der Zeit und dem aktuellen Steuerwert des Steuerparameters des Fahrzeugs zu ermitteln. Mit anderen Worten ist die Steuereinrichtung dazu eingerichtet, die Bewegungsgleichung zu ermitteln, welche die Bewegung des jeweiligen zumindest einen Objektes in Bezug auf das Fahrzeug beschreibt unter der Annahme, dass der aktuelle Steuerwert des Steuerparameters des Fahrzeugs beibehalten wird. Die Bewegungsgleichung zur Beschreibung der Bewegung des jeweiligen zumindest einen Objektes in Bezug auf das Fahrzeug ermöglicht eine Ermittlung einer Trajektorie des zumindest einen Objektes in Bezug auf ein Referenzsystem, welches auf das Fahrzeug bezogen ist.

Die Steuereinrichtung ist dazu eingerichtet, basierend auf der Bewegungsgleichung zur Beschreibung der Bewegung des jeweiligen zumindest einen Objekts in Bezug auf das Fahrzeug für den aktuellen Steuerwert des Steuerparameters eine Erfüllung eines vorbestimmten Relevanzkriteriums durch das jeweilige zumindest eine Objekt zu überprüfen. Mit anderen Worten ist die Steuereinrichtung dazu eingerichtet, zu überprüfen, ob das zumindest eine Objekt für eine weitergehende Auswertung zur Ermittlung eines möglichen Kollisionsereignisses des Objektes mit dem Fahrzeug relevant ist. Die Relevanz des Objektes hängt von der Erfüllung des vorbestimmten Relevanzkriteriums ab. Das vorbestimmte Relevanzkriterium bezieht sich auf die Bewegungsgleichung zur Beschreibung der Bewegung des jeweiligen zumindest einen Objekts in Bezug auf das Fahrzeug. Es kann beispielsweise vorgesehen sein, dass das Relevanzkriterium erfüllt ist, wenn sich aus der Bewegungsgleichung des Objektes in Bezug auf das Fahrzeug ergibt, dass ein vorgegebener Mindestabstand zwischen dem Fahrzeug und dem Objekt unterschritten wird. Mit anderen Worten kann das Relevanzkriterium vorgeben, dass der vorgegebene Mindestabstand zwischen dem Fahrzeug und dem Objekt durch die prognostizierte Trajektorie des Objekts in Bezug auf das Fahrzeug unterschritten wird.

Die Überprüfung des Objekts auf die Relevanz ergibt den Vorteil, dass die weiteren Verfahrensschritte auf diejenigen Objekte beschränkt werden können, für welche grundsätzlich eine Möglichkeit einer Kollision mit dem Fahrzeug angenommen werden kann. Dadurch kann ein Berechnungsaufwand reduziert werden, da eine weitere Auswertung der Bewegung eines Objektes, welches das Relevanzkriterium nicht erfüllt, ausbleiben kann. Die Steuereinrichtung ist dazu eingerichtet, bei einer Erfüllung des Relevanzkriteriums basierend auf der Bewegungsgleichung in Bezug auf das Fahrzeug für Steuerwerte eines vorgegebenen Steuerwertebereichs jeweilige Kollisionswerte eines Kollisionsparameters betreffend ein prognostiziertes Kollisionsereignis zwischen dem Fahrzeug und dem jeweiligen zumindest einen Objekt zu ermitteln. Mit anderen Worten ist es vorgesehen, dass in dem Fall, dass das Objekt relevant ist, jeweilige Kollisionswerte eines Kollisionsparameters ermittelt werden, welche ein prognostiziertes Kollisionsereignis zwischen dem Fahrzeug und dem jeweiligen zumindest einen Objekt charakterisieren. Der Kollisionsparameter kann beispielsweise eine prognostizierte Energie welche bei einer Kollision zwischen dem Fahrzeug und dem Objekt auftritt umfassen. Dabei wird der Kollisionswert des Kollisionsparameters für die jeweiligen Steuerwerte des vorgegebenen Steuerwertebereichs ermittelt. Die Steuerwerte des vorgegebenen Steuerwertebereichs umfassen den aktuellen Steuerwert des Steuerparameters. Die Steuereinrichtung ist somit dazu eingerichtet, den Kollisionswert des Kollisionsparameters zu ermitteln welcher die prognostizierte Kollisionen zwischen dem Fahrzeug und dem Objekt charakterisiert, welche unter Beibehaltung des aktuellen Steuerwerts auftritt. Der Steuerwertebereich umfasst zusätzlich zu dem aktuellen Steuerwert des Steuerparameters auch weitere Steuerwerte des Steuerparameters. Die weiteren Steuerwerte können beispielsweise zusätzlich zu dem aktuellen Steuerwert weitere Steuerwerte um den aktuellen Steuerwert umfassen. Handelt es sich bei dem Steuerparameter beispielsweise um einen Lenkwinkel einer Lenkung des Fahrzeugs kann der Steuerwertebereich beispielsweise einen kompletten Winkelbereich des Lenkwinkels umfassen, welcher durch die Lenkung eingestellt werden kann. Der Steuerwertebereich kann auch auf solche Steuerwerte beschränkt sein, welche ausgehend von dem aktuellen Steuerwerte innerhalb eines vorgegebenen Zeitraums eingestellt werden können. Die Steuerwerte können des Steuerwertebereichs können vorgegebene Abstände zueinander aufweisen.

Die Steuereinrichtung ist dazu eingerichtet, basierend auf den jeweiligen Kollisionswerten des Kollisionsparameters, welche für die jeweiligen Steuerwerte des Steuerwertebereichs ermittelt sind, eine Einschlagfunktion in Bezug auf das Fahrzeug für das jeweilige zumindest eine Objekt zu ermitteln. Die Einschlagfunktion weist den jeweiligen Steuerwerten des Steuerwertebereichs einen jeweiligen Einschlagswert zu, welcher einen Schweregrad des prognostizierten Kollisionsereignisses zwischen dem Fahrzeug und dem jeweiligen zumindest einen Objekt beschreibt. Mit anderen Worten ist die Steuereinrichtung dazu eingerichtet, die Einschlagsfunktion zu ermitteln, welche eine Intensität des prognostizierten Kollisionsereignisses, basierend auf den jeweiligen Kollisionswerten beschreiben kann.

Die Steuereinrichtung ist dazu eingerichtet, aus der jeweiligen Einschlagfunktion in Bezug auf das Fahrzeug für das zumindest eine Objekt eine Gesamteinschlagfunktion des Fahrzeuggespanns zu ermitteln. Mit anderen Worten kann sich die Situation ergeben, dass mehrere der Objekte in der Umgebung des Fahrzeugs erfasst sind. Für jedes der erfassten Objekte kann die jeweilige Einschlagfunktion, welche sich auf das Fahrzeug und das jeweilige Objekt bezieht, ermittelt werden. Um den optimalen Steuerwert unter Berücksichtigung aller relevanten Objekte ermitteln zu können, ist die Steuereinrichtung dazu eingerichtet, die einzelnen Einschlagfunktionen zu der Gesamteinschlagsfunktion des Fahrzeuggespanns zu kombinieren.

Die Steuereinrichtung ist dazu eingerichtet, aus der Gesamteinschlagfunktion des Fahrzeuggespanns nach einem Optimierungsverfahren einen optimalen Steuerwert des Steuerparameters zu ermitteln. Mit anderen Worten bildet die Gesamteinschlagfunktion des Fahrzeuggespanns den Gesamteinschlagswert in Bezug auf das Fahrzeuggespann für sämtliche Objekte ab. Der Gesamteinschlagswert kann beispielsweise eine Intensität der jeweiligen Kollisionen beschreiben. Die Steuereinrichtung ist dazu eingerichtet, den optimalen Steuerwerts des Steuerparameters zu ermitteln an welchem der Gesamt Einschlagswert ein Minimum aufweist.

Durch die Erfindung ergibt sich der Vorteil, dass eine effiziente Ermittlung von optimalen Steuerwerten des Steuerparameters ermöglicht wird.

Zu der Erfindung gehören Ausführungsformen, durch die sich zusätzliche Vorteile ergeben.

Eine Weiterbildung der Erfindung sieht vor, dass die Steuereinrichtung dazu eingerichtet ist, Anhängerbewegungsdaten, die eine Bewegung eines Anhängers des Fahrzeuggespanns beschreiben, zu empfangen und/oder aus den Fahrzeugbewegungsdaten zu ermitteln. Mit anderen Worten ist es gemäß einer Alternative vorgesehen, dass die Steuereinrichtung dazu eingerichtet ist, die Anhängerbewegungsdaten zu empfangen. Gemäß einer anderen Alternative ist es vorgesehen, dass die Steuereinrichtung dazu eingerichtet ist, die Fahrzeugbewegungsdaten zur Ermittlung der Anhängerbewegungsdaten auszuwerten. Es kann beispielsweise vorgesehen sein, dass geometrische Relationen zwischen dem Fahrzeug und dem Anhänger in der Steuereinrichtung gespeichert sind. Die Steuereinrichtung kann dazu eingerichtet sein, die Anhängerbewegung aus einer Historie der Bewegung des Fahrzeugs unter Berücksichtigung der geometrischen Relationen zu ermitteln.

Die Steuereinrichtung ist dazu eingerichtet, basierend auf den Anhängerbewegungsdaten eine Bewegungsgleichung zur Beschreibung der Bewegung des Anhängers in Abhängigkeit von der Zeit und dem aktuellen Steuerwert des Steuerparameters des Fahrzeugs zu ermitteln. Mit anderen Worten kann zusätzlich zu der Bewegungsgleichung zur Beschreibung der Bewegung des Fahrzeugs auch die Bewegungsgleichung zur Beschreibung der Bewegung des Anhängers ermittelt werden. Die Gleichung basiert ebenfalls auf den aktuellen Steuerwerten des Steuerparameters des Fahrzeugs.

Die Steuereinrichtung ist dazu eingerichtet, basierend auf den Objektbewegungsdaten des zumindest einen Objektes und den Anhängerbewegungsdaten eine Bewegungsgleichung zur Beschreibung der Bewegung des jeweiligen zumindest einen Objekts in Bezug auf den Anhänger in Abhängigkeit der Zeit unter Annahme des aktuellen Steuerwerts zu ermitteln.

In dem Fall dass das Objekt das Relevanzkriterium erfüllt, wird durch die Steuereinrichtung für die Steuerwerte des vorgegebenen Steuerwertebereichs jeweilige Kollisionswerte des Kollisionsparameters betreffend ein prognostiziertes Kollisionsereignis zwischen dem Anhänger und dem jeweiligen zumindest einen Objekt ermittelt. Mit anderen Worten hängen zusätzlich zu den Kollisionswerten des Kollisionsparameters betreffend ein prognostiziertes Kollisionsereignis zwischen dem Fahrzeug und dem jeweiligen zumindest einen Objekt auch die Kollisionswerte des Kollisionsparameters betreffend das prognostizierte Kollisionsereignis zwischen dem Anhänger und dem jeweiligen zumindest ein Objekt von dem Steuerwert des Steuerparameters ab. Die Steuereinrichtung ist dazu eingerichtet, basierend auf den jeweiligen Kollisionswerten des Kollisionsparameters für den Steuerwertebereich eine Einschlagfunktion in Bezug auf den Anhänger für das jeweilige zumindest eine Objekt zu ermitteln, welche den Steuerwerten des Steuerwertebereichs einen Einschlagswert betreffend das Kollisionsereignis zwischen dem Anhänger und dem jeweiligen zumindest einen Objekt zuweist.

Die Steuereinrichtung ist dazu eingerichtet, aus der jeweiligen Einschlagfunktion in Bezug auf das Fahrzeug des zumindest einen Objekts und der jeweiligen Einschlagfunktion in Bezug auf den Anhänger des zumindest einen Objekts die Gesamteinschlagfunktion des Fahrzeuggespanns zu ermitteln. Mit anderen Worten ergibt sich die Gesamteinschlagfunktion des Fahrzeuggespanns aus den jeweiligen Einschlagfunktionen in Bezug auf das Fahrzeug den Anhänger. Durch die Weiterbildung ergibt sich der Vorteil, dass zusätzlich zu möglichen Kollisionsereignissen des Fahrzeugs auch mögliche Kollisionsereignisse des Anhängers berücksichtigt werden können. Dadurch können insbesondere Kollisionsereignisse bei Abbiege- oder Rangiermanövern eines Fahrzeuggespanns zuverlässiger prognostiziert werden.

Eine Weiterbildung der Erfindung sieht vor, dass das vorbestimmte Relevanzkriterium eine Unterschreitung eines vorgegebenen Mindestabstands durch einen prognostizierten minimalen Abstand zwischen dem Fahrzeug und dem Objekt umfasst. Mit anderen Worten ist die Steuereinrichtung dazu eingerichtet, basierend auf der Bewegungsgleichung zur Beschreibung der Bewegung des jeweiligen zumindest einen Objektes in Bezug auf das Fahrzeug für den aktuellen Steuerwert des Steuerparameters einen prognostizierten minimalen Abstand zwischen dem Fahrzeug und dem Objekt zu ermitteln, der sich durch eine prognostizierte Trajektorie des Objekts in Bezug auf das Fahrzeug ergibt. Die Steuereinrichtung ist dazu eingerichtet, den prognostizierten minimalen Abstand mit dem vorgegebenen Mindestabstands zu vergleichen. Das vorbestimmte Relevanzkriterium gibt vor, dass das jeweilige Objekt als relevant bewertet wird wenn der Mindestabstand zwischen dem Fahrzeug und dem Objekt durch den minimalen Abstand unterschritten wird. Durch die Weiterbildung ergibt sich der Vorteil, dass ein einfach zu überprüfendes Relevanzkriterium zur Feststellung einer Relevanz eines Objekts für eine Prognose eines Kollisionsereignisses bereitgestellt wird.

Eine Weiterbildung der Erfindung sieht vor, dass der Kollisionsparameter eine Dauer bis zu dem Kollisionsereignis umfasst. Mit anderen Worten ist die Steuereinrichtung dazu eingerichtet, die Dauer bis zum Eintritt des Kollisionsereignisses zwischen dem Fahrzeuggespann und dem Objekt zu ermitteln.

Eine Weiterbildung der Erfindung sieht vor, dass der Kollisionsparameter einen Kollisionsort des Kollisionsereignisses in Bezug auf das Fahrzeuggespann umfasst. Mit anderen Worten ist die Steuereinrichtung dazu eingerichtet, der Kollisionsort zu ermitteln an welcher zwischen dem Fahrzeuggespann und dem Objekt das prognostizierte Kollisionsereignis erfolgt. Der Kollisionsort ist in Bezug auf das Fahrzeuggespann definiert. Der Kollisionsort kann beispielsweise in Bezug auf das Fahrzeug und/oder den Anhänger definiert sein. Der Kollisionsort kann beispielsweise eine Position der Kollisionen in Bezug auf das Fahrzeug und/oder eine Ausrichtung zwischen dem Objekt und dem Fahrzeug bei der Kollision beschreiben. Es kann beispielsweise durch der Kollisionsort beschrieben sein, an welchem Ort des Fahrzeugs eine Kollision mit dem Objekt erfolgt und unter welchem Winkel das Objekt an dem Ort mit dem Fahrzeug kollidiert. Durch die Weiterbildung ergibt sich der Vorteil, dass ein Kollisionsparameter ermittelt wird, der zur Ermittlung eines Schweregrades des Kollisionsereignisses besonders geeignet ist.

Eine Weiterbildung der Erfindung sieht vor, dass der Kollisionsparameter eine Kollisionsenergie des Kollisionsereignisses umfasst. Mit anderen Worten ist die Steuereinrichtung dazu eingerichtet, die Kollisionsenergie zu ermitteln, die bei dem prognostizierten Kollisionsereignis freigesetzt wird. Beispielsweise kann vorgesehen sein, dass eine Masse des Fahrzeugs und eine Masse des Objekts bekannt sind oder von der Steuereinrichtung ermittelt werden. Anhand der von der Steuereinrichtung ermittelten Geschwindigkeiten des Fahrzeugs und des Objekts bei dem Kollisionsereignis kann die Steuereinrichtung die bei dem Kollisionsereignis freigesetzte Energie ermitteln. Die Weiterbildung hat den Vorteil, dass mit der Kollisionsenergie ein Kollisionsparameter zur Verfügung steht, der besonders geeignet ist, um das Ausmaß eines Kollisionsereignisses abzuschätzen.

Gemäß einer Weiterbildung der Erfindung ist die Steuereinrichtung dazu eingerichtet, das Fahrzeug zur Einstellung des optimalen Steuerwerts des Steuerparameters anzusteuern. Mit anderen Worten ist die Steuereinrichtung dazu eingerichtet, den jeweiligen Steuerwert des wenigstens einen Steuerparameters durch eine Ansteuerung einer Quer- und/oder Längsführung des Fahrzeugs einzustellen. Beispielsweise kann vorgesehen sein, dass die Steuereinrichtung zur Einstellung des optimalen Steuerwerts einen Lenkwinkel, ein Beschleunigungsverhalten und/oder ein Bremsverhalten des Fahrzeugs ansteuert. Die Weiterbildung hat den Vorteil, dass durch ein aktives Eingreifen der Kollisionswarnvorrichtung in die Fahrzeugführung ein prognostiziertes Kollisionsereignis vermieden oder abgeschwächt werden kann.

Eine Weiterbildung der Erfindung sieht vor, dass der Steuerparameter einen Lenkwinkel und/oder eine Beschleunigung umfasst. Mit anderen Worten ist die Steuereinrichtung dazu eingerichtet, die Einschlagfunktion in Abhängigkeit des Lenkwinkels und/oder der Beschleunigung des Fahrzeugs zu bestimmen. Dies hat den Vorteil, dass die wichtigsten Steuerparameter des Fahrzeugs überwacht werden können.

Gemäß einer Weiterbildung der Erfindung ist die Kollisionswarnvorrichtung dazu eingerichtet, eine Ausgabeeinrichtung zur Ausgabe von Ausgabesignalen an einen Fahrer des Fahrzeugs zur Einstellung des optimalen Steuerwerts des Steuerparameters anzusteuern. Mit anderen Worten ist die Kollisionswarnvorrichtung dazu eingerichtet, den Fahrer des Fahrzeugs mittels einer Ausgabeeinrichtung zum Einstellen des optimalen Steuerwerts des Steuerparameters anzuleiten. Durch die Weiterbildung ergibt sich der Vorteil, dass die Kollisionswarnvorrichtung dazu ausgebildet ist, den Fahrer zur Vermeidung des Kollisionsereignisses oder zur Abschwächung des Kollisionsereignisses anzuleiten. Weiterhin ergibt sich der Vorteil, dass die Kollisionswarnvorrichtung leichter in bekannte Fahrzeuge nachgerüstet werden kann.

Eine Weiterbildung der Erfindung sieht vor, dass die Kollisionswarnvorrichtung eine Sensoreinrichtung umfasst, die dazu eingerichtet ist, das mindestens eine Objekt in einer Umgebung des Fahrzeuggespanns zu erfassen und die Objektbewegungsdaten an die Steuereinrichtung zu senden, mit anderen Worten, dass die Kollisionswarnvorrichtung dazu eingerichtet ist, mittels der Sensoreinrichtung das mindestens eine Objekt in der Umgebung des Fahrzeuggespanns zu erfassen. Beispielsweise kann vorgesehen sein, dass die Sensoreinrichtung Radar-, Ultraschall- oder Kamerasensoren umfasst, die dazu eingerichtet sind, die Umgebung des Fahrzeuggespanns zu überwachen. Die Sensoreinrichtung kann das mindestens eine Objekt und die Umgebung erfassen und die Bewegung des Objekts verfolgen. Aus der erfassten Bewegung des Objekts können durch die Sensoreinrichtung Objektbewegungsdaten generiert werden, die der Steuereinrichtung zur Verfügung gestellt werden.

Eine Weiterbildung der Erfindung sieht vor, dass die Steuereinrichtung dazu eingerichtet ist, das Fahrzeuggespann und/oder das wenigstens eine Objekt zur Vorhersage des Kollisionsereignisses oder wenigstens eines der Kollisionsparameter als Polygon zu modellieren. Mit anderen Worten ist vorgesehen, dass eine zweidimensionale Fläche oder ein dreidimensionales Volumen des Fahrzeuggespanns und/oder des Objekts ermittelt wird. Ein das Fahrzeuggespann repräsentierendes Polygon kann in der Steuereinrichtung gespeichert werden. Beispielsweise kann ein Polygon für das Fahrzeug und ein Polygon für den Anhänger bereitgestellt werden. Aus einem Winkel des Anhängers kann aus den beiden Polygonen das Polygon des Fahrzeuggespanns ermittelt werden. Ein Polygon zur Beschreibung des Objektes kann beispielsweise aus Daten der Sensoreinrichtung generiert werden. Es kann beispielsweise vorgesehen sein, dass die Sensoreinrichtung eine Pulsfolge des Objekts erfasst. Basierend auf der Punktwolke kann durch die Steuereinrichtung ein entsprechendes Polygon des Objekts erzeugt werden. Alternativ kann der Steuereinrichtung ein Datensatz eines Polygons zur Verfügung gestellt werden. Bestimmte Objekte können durch die Steuereinrichtung identifiziert und die entsprechenden Polygone abgerufen werden. Die Weiterbildung hat den Vorteil, dass durch die Verwendung eines Polygonmodells anstelle eines Punktes zur Darstellung des Fahrzeuggespanns eine genauere Bestimmung eines Kollisionsereignisses und der Kollisionsparameter vorgesehen werden kann.

Ein zweiter Aspekt der Erfindung betrifft ein Fahrzeug welches eine Kollisionswarnvorrichtung nach dem ersten Aspekt der Erfindung aufweist. Die Kollisionswarnvorrichtung kann fest in das Fahrzeug integriert sein oder als Nachrüstlösung in dem Fahrzeug bereitgestellt sein.

Ein dritter Aspekt der Erfindung betrifft ein Verfahren zum Betreiben einer Kollisionswarnvorrichtung.

Das Verfahren umfasst die folgenden durch eine Steuereinrichtung der Kollisionswarnvorrichtung durchgeführten Schritte.

Ein Schritt umfasst ein Empfangen von Fahrzeugbewegungsdaten, die eine Bewegung eines Fahrzeugs eines Fahrzeuggespanns beschreiben.

Ein Schritt umfasst ein Empfangen von Objektbewegungsdaten zumindest eines Objektes in einer Umgebung des Fahrzeuggespanns, die eine Bewegung des zumindest einen Objektes beschreiben.

Ein Schritt umfasst ein Ermitteln einer Bewegungsgleichung zur Beschreibung der Bewegung des Fahrzeugs in Abhängigkeit von einer Zeit und einem aktuellen Steuerwert eines Steuerparameters des Fahrzeugs basierend auf den Fahrzeugbewegungsdaten.

Ein Schritt umfasst ein Ermitteln einer Bewegungsgleichung zur Beschreibung der Bewegung des jeweiligen zumindest einen Objektes in Bezug auf das Fahrzeug in Abhängigkeit von der Zeit und dem aktuellen Steuerwert des Steuerparameters des Fahrzeugs basierend auf den Objektbewegungsdaten des zumindest einen Objekts und den Fahrzeugbewegungsdaten.

Ein Schritt umfasst ein Überprüfen einer Erfüllung eines vorbestimmten Relevanzkriteriums durch das jeweilige zumindest eine Objekt basierend auf der Bewegungsgleichung zur Beschreibung der Bewegung des jeweiligen zumindest einen Objektes in Bezug auf das Fahrzeug für den aktuellen Steuerwert des Steuerparameters.

Ein bei einer Erfüllung des Relevanzkriteriums durchgeführter Schritt umfasst ein Ermitteln jeweiliger Kollisionswerte eines Kollisionsparameters, betreffend ein prognostiziertes Kollisionsereignis zwischen dem Fahrzeug und dem jeweiligen zumindest einen Objekt, basierend auf der Bewegungsgleichung für Steuerwerte eines vorgegebenen Steuerwertebereichs.

Ein Schritt umfasst ein Ermitteln einer Einschlagfunktion in Bezug auf das Fahrzeug für das jeweilige zumindest eine Objekt basierend auf den jeweiligen Kollisionswerten des Kollisionsparameters für den Steuerwertebereich, welche den Steuerwerten des Steuerwertebereichs einen Einschlagswert betreffend das prognostizierte Kollisionsereignis zwischen dem Fahrzeug und dem jeweiligen zumindest einen Objekt zuweist.

Ein Schritt umfasst ein Ermitteln einer Gesamteinschlagfunktion des Fahrzeuggespanns aus der jeweiligen Einschlagfunktion in Bezug auf das Fahrzeug für das zumindest eine Objekt, und

Schritt umfasst ein Ermitteln eines optimalen Steuerwerts des Steuerparameters aus der Gesamteinschlagfunktion des Fahrzeuggespanns nach einem Optimierungsverfahren.

Ein vierter Aspekt der Erfindung betrifft ein Computerprogramm, umfassend Befehle, die bewirken, dass die vorgenannte Kollisionswarnvorrichtung die Verfahrensschritte, wie sie beispielhaft zuvor beschrieben wurden, zum Ermitteln des ersten digitalen Ausgabesignals ausführt oder durchführt.

Ein fünfter Aspekt der Erfindung betrifft ein computerlesbares Medium, auf dem das vorgenannte Computerprogramm gespeichert ist. Das computerlesbare Medium kann als Datenspeicher realisiert sein.

Zum Durchführen der beschriebenen Schritte kann durch die Steuereinrichtung eine Prozessorschaltung bereitgestellt sein, die eine Programmierung oder Software aufweist, die Programminstruktionen umfasst, welche die Prozessorschaltung bei Ausführen der Programminstruktionen dazu veranlasst, eine Ausführungsform des Verfahren durchzuführen. Die Prozessorschaltung kann hierzu zumindest einen Mikroprozessor und/oder Mikrocontroller aufweisen. Die Programminstruktionen können in einem Datenspeicher der Prozessorschaltung gespeichert sein.

Zu der Erfindung gehören auch Weiterbildungen des erfindungsgemäßen Fahrzeugs, des erfindungsgemäßen Verfahrens, des erfindungsgemäßen Computerprogramms sowie des erfindungsgemäßen computerlesbaren Mediums, die Merkmale aufweisen, wie sie bereits im Zusammenhang mit den Weiterbildungen der erfindungsgemäßen Kollisionswarnvorrichtung beschrieben worden sind. Aus diesem Grund sind die entsprechenden Weiterbildungen des erfindungsgemäßen Fahrzeugs, des erfindungsgemäßen Verfahrens, des erfindungsgemäßen Computerprogramms sowie des erfindungsgemäßen computerlesbaren Mediums hier nicht noch einmal beschrieben.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Die Erfindung umfasst auch die Kombinationen der Merkmale der beschriebenen Ausführungsformen.

Im Folgenden ist ein Ausführungsbeispiel der Erfindung beschrieben. Hierzu zeigt:

Fig. 1    eine schematische Darstellung eines Fahrzeugs mit einer Kollisionswarnvorrichtung sowie zweier Objekte;

Fig. 2    eine schematische Darstellung des Fahrzeugs mit der Kollisionswarnvorrichtung sowie ein Objekt;

Fig. 3    zeigt eine schematische Darstellung eines ermittelten minimalen Abstands zwischen dem Objekt und dem Fahrzeug;

Fig. 4    eine schematische Darstellung eines Kollisionsorts eines Kollisionsereignisses in Bezug auf das Fahrzeug;

Fig. 5    zeigt eine weitere schematische Darstellung eines Kollisionsorts eines Kollisionsereignisses in Bezug auf das Fahrzeug;

Fig. 6    zeigt eine schematische Darstellung eines Kollisionsorts eines Kollisionsereignisses in Bezug auf einen Anhänger

Fig. 7    eine schematische Darstellung von zwei Einschlagfunktionen;

Fig. 8    zeigt eine schematische Darstellung einer resultierenden Gesamteinschlagfunktion;

Fig. 9    eine schematische Darstellung eines Verlaufs eines Verfahrens zum Betreiben einer Kollisionswarnvorrichtung; und

Fig. 10    eine schematische Darstellung eines Verlaufs eines Verfahrens zum Betreiben einer Kollisionswarnvorrichtung.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

**In** den Figuren sind funktionsgleiche Elemente jeweils mit denselben Bezugszeichen versehen.

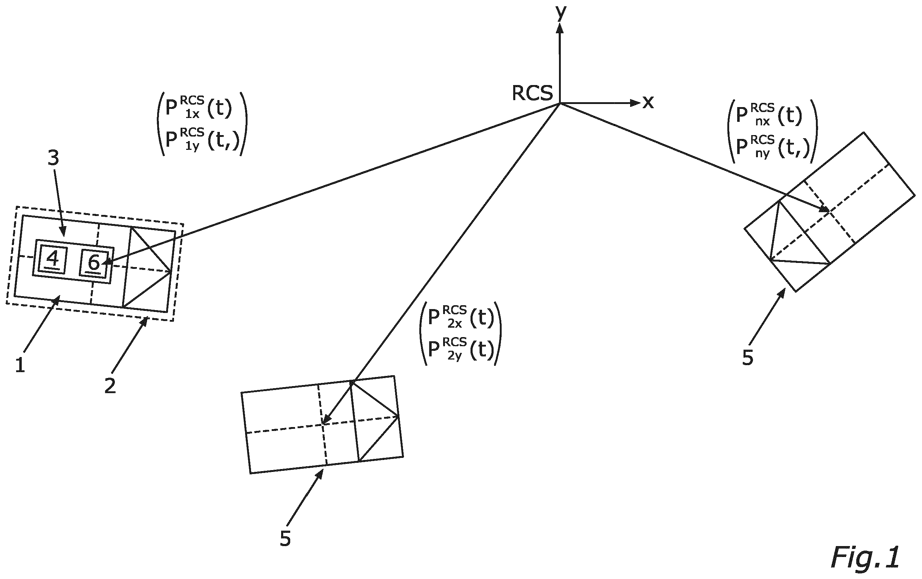

Fig. 1 zeigt eine schematische Darstellung eines Fahrzeugs mit einer Kollisionswarnvorrichtung sowie zweier Objekte.

Das in Fig.1 gezeigte Fahrzeug 1 kann zu einem Fahrzeuggespann 2 gehören. Das Fahrzeug 1 kann eine Kollisionswarnvorrichtung 3 aufweisen, welche eine Steuereinrichtung 4 aufweisen kann. Die Kollisionswarnvorrichtung 3 kann dazu vorgesehen sein, basierend auf Fahrzeugbewegungsdaten, die eine Bewegung des Fahrzeugs 1 beschreiben, und Objektbewegungsdaten, welche die Bewegung eines zugehörigen Objektes 5 in einer Umgebung des Fahrzeuggespanns 2 beschreiben, einen jeweiligen Optimalwert eines Steuerparameters zum Steuern des Fahrzeugs 1 zu ermitteln. Der Optimalwert des Steuerparameters kann dazu vorgesehen sein, ein durch die Steuereinrichtung 4 prognostiziertes Kollisionsereignis zwischen dem Fahrzeug 1 und dem Objekte 5 zu vermeiden oder um einen Schweregrad des prognostizierten Kollisionsereignisses zu reduzieren.

Die Fahrzeugbewegungsdaten können der Steuereinrichtung 4 durch das Fahrzeug 1 bereitgestellt werden. Die Steuereinrichtung 4 ist dazu eingerichtet, basierend auf den Fahrzeugbewegungsdaten, eine Bewegungsgleichung zur Beschreibung der Bewegung des Fahrzeugs 1 in Abhängigkeit von einer Zeit t und einem aktuellen Steuerwert eines Steuerparameters des Fahrzeugs 1 zu ermitteln. Die Bewegungsgleichung kann dazu vorgesehen sein, eine Trajektorie 8 des Fahrzeugs 1 in einem auf die Umgebung bezogenes, ortsfestes Bezugssystem RCS zu beschreiben. Die Bewegungsgleichung weist eine Zeitabhängigkeit auf, sodass eine Lage des Fahrzeugs 1 in Abhängigkeit von der Zeit t ermittelt werden kann. Die Bewegungsgleichung hängt auch von dem aktuellen Steuerwert des Steuerparameters des Fahrzeugs ab. Mit anderen Worten ist die Bewegungsgleichung dazu vorgesehen, die Trajektorie 8 des Fahrzeugs 1 in Abhängigkeit von dem eingestellten Steuerwert zu beschreiben. Der Steuerwert kann beispielsweise eine aktuelle Beschleunigung des Fahrzeugs 1 und/oder einen Lenkwinkel des Fahrzeugs 1 umfassen. Dadurch lässt sich die Trajektorie 8 des Fahrzeugs 1 ermitteln, welche das Fahrzeug 1 für den jeweiligen Steuerwert des Steuerparameters verfolgt. Vorteilhafterweise lässt sich dadurch die Bewegung des Fahrzeugs 1 sowohl für eine Beibehaltung des aktuellen Steuerwerts des Steuerparameters als auch für eine Änderung des aktuellen Steuerwerts des Steuerparameters ermitteln.

Die Kollisionswarnvorrichtung 3 kann eine Sensoreinrichtung 6 aufweisen, welche dazu eingerichtet sein kann, das Objekt 5 und/oder weitere der Objekte 5 in der Umgebung des Fahrzeuggespanns 2 zu erfassen. Die Sensoreinrichtung 6 kann zur Erfassung der Objekte 5 beispielsweise Radareinheiten, Lidareinheiten, Ultraschalleinheiten oder Kameraeinheiten umfassen. Die Sensoreinrichtung 6 kann dazu eingerichtet sein, die Objekte 5 mehrmals zu unterschiedlichen Zeitpunkten zu erfassen, um die Objektbewegungen der jeweiligen Objekte 5 zu ermitteln. Die Objektbewegungsdaten können der Steuereinrichtung 4 zur weiteren Auswertung durch die Sensoreinrichtung 6 bereitgestellt werden. Wie zu dem Fahrzeug 1 kann durch die Steuereinrichtung 4 eine Bewegungsgleichung des Objekts 5 ermittelt, werden, die ebenfalls auf das ortsfeste Koordinatensystem RCS bezogen sein kann, um die Trajektorie 8 des Objekts 5 in dem ortsfesten Bezugssystem zu beschreiben.

Fig. 1 zeigt eine Verkehrsszene in der Umgebung des Fahrzeugs 1, welche mehrere Objekte 5 aufweisen kann. Die Bewegungen der Objekte 5 können durch Bewegungsgleichungen in Bezug auf das Straßenkoordinatensystem RCS beschrieben werden.

Die Trajektorien 8 der Objekte 5 und des Fahrzeugs 1 können in dem Straßenkoordinatensystem RCS als parametrische kinematische Gleichungen, kurz Bewegungsgleichungen, beschrieben werden. Eine Informationsquelle für die Bewegungen kann die Sensoreinrichtung 6 im Fahrzeug 1, eine fahrzeugexterne Infrastruktureinrichtung, oder eine Car2X-Vorrichtung umfassen.

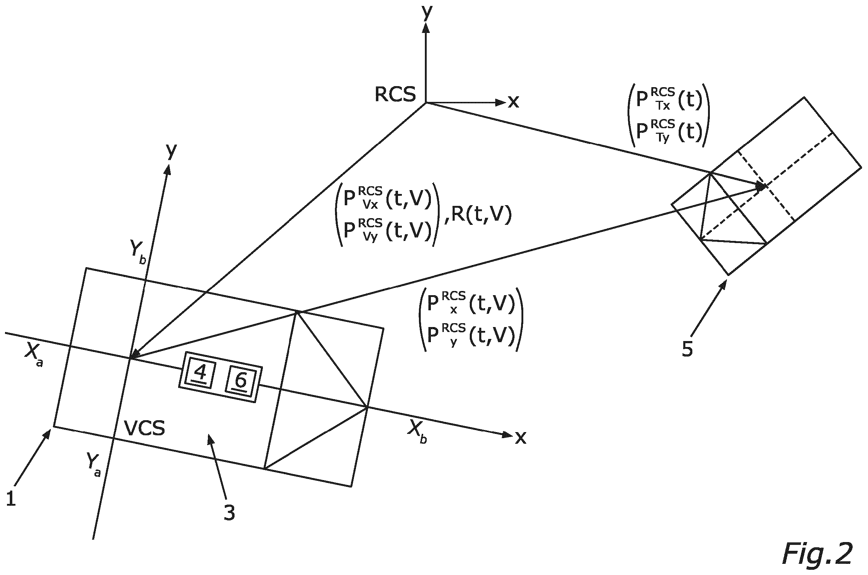

Fig. 2 zeigt eine schematische Darstellung des Fahrzeugs mit der Kollisionswarnvorrichtung sowie ein Objekt; Die Steuereinrichtung 4 ist dazu eingerichtet, basierend auf den Objektbewegungsdaten der jeweiligen Objekte 5 und den Fahrzeugbewegungsdaten eine Bewegungsgleichung zur Beschreibung der Bewegung des jeweiligen Objektes 5 in Bezug auf das Fahrzeug 1 in Abhängigkeit von der Zeit t und dem aktuellen Steuerwert des Steuerparameters des Fahrzeugs 1 zu ermitteln.

Es kann beispielsweise vorgesehen sein, dass durch die Steuereinrichtung 4 basierend auf den Objektbewegungsdaten des jeweiligen Objektes 5 eine Bewegungsgleichung zur Beschreibung der Bewegung des jeweiligen Objektes 5 in Bezug auf das ortsfeste Straßenkoordinatensystem RCS in Abhängigkeit von der Zeit t ermittelt wird. Die Bewegungsgleichung zur Beschreibung der Bewegung des jeweiligen Objektes 5 in Bezug auf das ortsfeste Straßenkoordinatensystem RCS in Abhängigkeit von der Zeit t kann beispielsweise als polynomielle Beschreibung zweiter Ordnung wie folgt beschrieben sein:

$$\begin{pmatrix} P_{Tx}^{RCS}(t) \\ P_{Ty}^{RCS}(t) \end{pmatrix} = \begin{pmatrix} x + v \cdot \cos(\varphi) \cdot t - \dfrac{v^2 \cdot \frac{\delta}{L} \cdot \sin(\varphi) - a \cdot \cos(\varphi)}{2} \cdot t^2 \\[3mm] y + v \cdot \sin(\varphi) \cdot t + \dfrac{v^2 \cdot \frac{\delta}{L} \cdot \cos(\varphi) + a \cdot \sin(\varphi)}{2} \cdot t^2 \end{pmatrix}$$

Dabei können $x$, $y$ die Position, $v$ die Geschwindigkeit, $a$ die Beschleunigung, $\varphi$ die Orientierung, $\delta$ der Lenkwinkel und der $L$ Radstand sein.

Die Bewegungsgleichung des Fahrzeugs 1 kann in Abhängigkeit von den Steuerparametern beschrieben werden.

$$\begin{pmatrix} P_{Vx}^{RCS}(t,V) \\ P_{Vy}^{RCS}(t,V) \end{pmatrix}$$

Die Steuerparameter können die Beschleunigung $a$ und den Lenkwinkel $\delta$ umfassen.

$$V = (a, \delta)$$

In einem weiteren Schritt können die jeweiligen Bewegungsgleichungen, welche an das Koordinatensystem RCS gekoppelt sind, verrechnet werden, um die Bewegung der jeweiligen Objekte 5 durch eine Bewegungsgleichung zur Beschreibung der Bewegung des jeweiligen Objektes 5 in Bezug auf das Fahrzeug 1 in Abhängigkeit von der Zeit t und dem aktuellen Steuerwert des Steuerparameters des Fahrzeugs 1 zu ermitteln.

Unter Einbeziehung einer rotatorischen Lage des Fahrzeugs R(t,V) kann sich für die Gleichung des Objekts 5 in Bezug auf das Fahrzeug 1 ergeben:

$$\begin{pmatrix} P_x(t,V) \\ P_y(t,V) \end{pmatrix} = R(t,V) \cdot \begin{pmatrix} P_{Tx}^{RCS}(t) - P_{Vx}^{RCS}(t,V) \\ P_{Ty}^{RCS}(t) - P_{Vy}^{RCS}(t,V) \end{pmatrix}$$

Dadurch ist es möglich die Trajektorie 8 des jeweiligen Objektes 5 in einem Koordinatensystem VCS zu beschreiben, welches auf das Fahrzeug 1 bezogen ist.

Die Bewegung der Objekte 5 wird relativ zum Fahrzeug-Koordinatensystem VCS in Abhängigkeit von der Zeit t und der Bewegung des Fahrzeugs 1 dargestellt.

Die Bewegungsgleichung des Objekts wird in ein mitgeführtes Ego-Fahrzeug-Koordinatensystem (VCS) transformiert, das die Rotation des Ego-Fahrzeugs R(t,V) berücksichtigt.

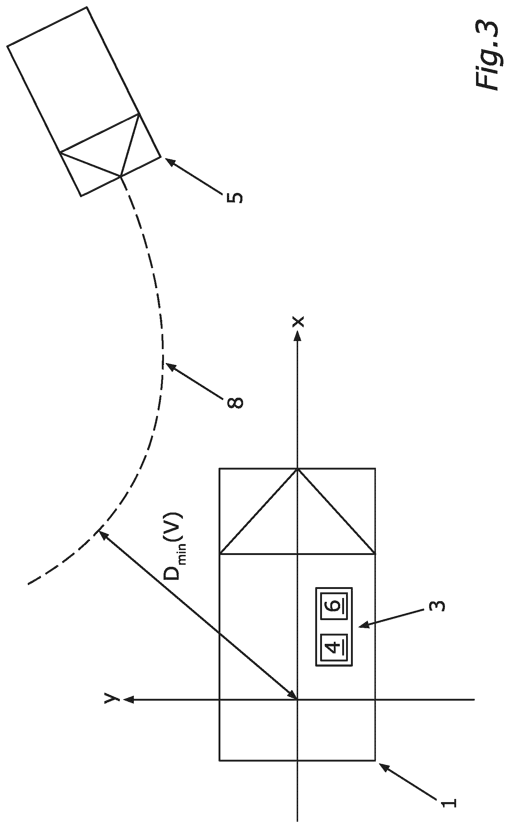

Fig. 3 zeigt eine schematische Darstellung eines ermittelten minimalen Abstands zwischen dem Objekt und dem Fahrzeug.

Die Steuereinrichtung 4 kann dazu eingerichtet sein, basierend auf der Bewegungsgleichung zur Beschreibung der Bewegung des jeweiligen Objektes 5 in Bezug auf das Fahrzeug 1 für den aktuellen Steuerwert des Steuerparameters eine Erfüllung eines vorbestimmten Relevanzkriteriums durch das jeweilige zumindest eine Objekt 5 zu überprüfen.

Das Relevanzkriterium kann beispielsweise auf einen minimalen Abstand $D_{min}(V)$ bezogen sein, welcher sich bei einer Verfolgung der Trajektorie 8 durch das Objekt 5 zwischen dem Objekt 5 und dem Fahrzeug 1 ergibt. Dadurch kann abgeschätzt werden, ob eine weitere Berücksichtigung des Objektes 5 zur Kollisionsvermeidung erforderlich ist.

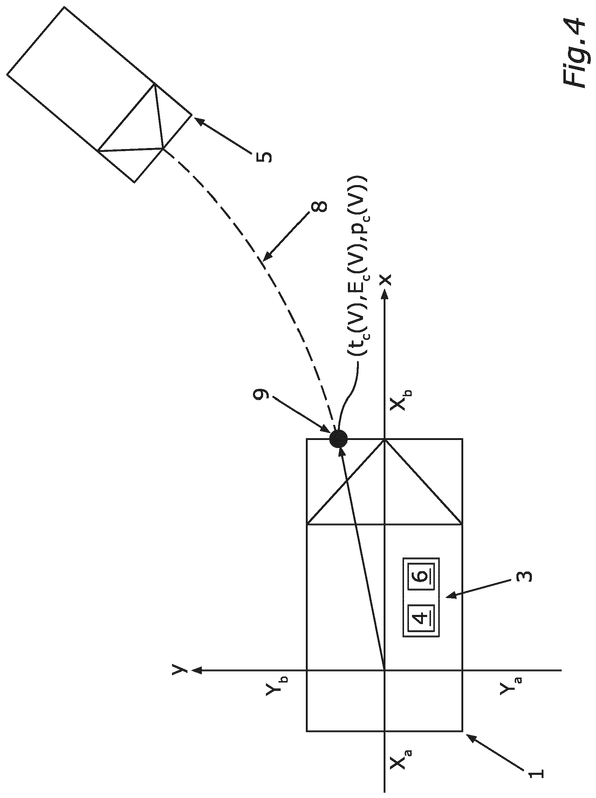

Fig. 4 zeigt eine schematische Darstellung eines Kollisionsorts eines Kollisionsereignisses in Bezug auf das Fahrzeug.

Die Steuereinrichtung 4 ist dazu eingerichtet, bei einer Erfüllung des Relevanzkriteriums basierend auf der Bewegungsgleichung für Steuerwerte eines vorgegebenen Steuerwertebereichs jeweilige Kollisionswerte eines Kollisionsparameters zu ermitteln. Mit anderen Worten, stellt sich bei der Relevanzüberprüfung heraus, dass das Objekt 5 relevant ist, werden jeweilige Kollisionswerte des Kollisionsparameters in Abhängigkeit von Steuerwerten des vorgegebenen Steuerwertebereichs ermittelt. Die Kollisionsparameter können beispielsweise eine Kollisionsenergie des Kollisionsereignisses, einen Kollisionsort 9 oder eine Zeit bis zu dem Kollisionsereignisse umfassen. Die jeweiligen Kollisionswerte können für den aktuellen Steuerwert des Steuerparameters, als auch für weitere Steuerwerte, welche in dem Steuerwertebereich liegen ermittelt werden. Der Steuerwertebereich kann beispielsweise einen maximalen möglichen Bereich der Werte des Steuerparameters beschreiben oder einen innerhalb eines vorgegebenen Zeitfensters einstellbaren Bereich der Werte des Steuerparameters. Die Ermittlung der jeweiligen Kollisionswerte kann unter Anwendung eines Variationsverfahrens erfolgen, bei dem eine Variation der aktuellen Steuerwerte erfolgen kann. Dadurch lässt sich eine einfachere Ermittlung der jeweiligen Kollisionswerte durchführen. Vorteilhafterweise lässt sich dadurch ermitteln, unter welchen konkreten Steuerwerten es zu dem prognostizierten Kollisionsereignis kommt und unter welchen Steuerwerten es nicht zu dem Kollisionsereignis kommt. Dazu können die Kollisionswerte der Kollisionsparameter in Abhängigkeit von den jeweiligen Steuerwerten ermittelt werden.

Fig. 4 zeigt das Fahrzeug, welches als Polygon der Abmessungen (($X_a$, $Y_a$), ($X_b$, $Y_b$)) beschrieben sein kann, sowie das Objekt 5, welches die Trajektorie 8 verfolgt.

Die Zeit bis zur Kollision mit der Frontseite des Fahrzeugs 1 und der Rückseite des Fahrzeugs 1 ergibt sich aus:

$$(X_n \in \{X_a, X_b\})$$

$$t_{c,x}(V) = \min\{t \in \mathbb{R}^+ | P_x(t,V) - X_n = 0 \land P_y(t,V) \in [Y_a, Y_b]\}$$

Die Zeit zur Kollision mit einer rechten oder linken Seite des Fahrzeugs 1 ergibt sich aus:

$$(Y_n \in \{Y_a, Y_b\})$$

$$t_{c,y}(V) = \min\{t \in \mathbb{R}^+ | P_y(t,V) - Y_n = 0 \wedge P_x(t,V) \in [X_a, X_b]\}$$

Die resultierende Zeit zur Kollision ergibt sich aus:

$$t_c(V) = \min\{t_{c,x}(V), t_{c,y}(V)\}$$

Variationen der Steuerwerte $\Delta V = (\Delta a, \Delta \delta)$ können genutzt werden, um auf eine effiziente Weise Variationen der Zeit bis zu der Kollision ermitteln zu können. Eine Annäherung an die Veränderung der Zeit bis zur Kollision mit dem Fahrzeug 1 an der Vorderseite oder der Hinterseite kann sich wie folgt ergeben:

$$t_{c,x}^*(V + \Delta V) = t_{c,x} - \frac{1}{\dot{P}_x(t_c,V)} \cdot \left( \frac{\partial P_x(t_c,V)}{\partial a} \cdot \Delta a + \frac{\partial P_x(t_c,V)}{\partial \delta} \cdot \Delta \delta \right)$$

Eine Annäherung an die Veränderung der Zeit bis zur Kollision mit dem Fahrzeug 1 an der rechten oder linken Seite kann sich wie folgt ergeben:

$$t_{c,y}^*(V + \Delta V) = t_{c,y} - \frac{1}{\dot{P}_y(t_c,V)} \cdot \left( \frac{\partial P_y(t_c,V)}{\partial a} \cdot \Delta a + \frac{\partial P_y(t_c,V)}{\partial \delta} \cdot \Delta \delta \right)$$

Ein Gesamtresultat der Variation kann sich dadurch wie folgt ergeben:

$$t_c^*(V + \Delta V) = \min\{t \in \{t_{c,x}^*, t_{c,y}^*\} | P_x(t,V^*) \in [X_a, X_b] \wedge P_y(t,V^*) \in [Y_a, Y_b]\}$$

Der Kollisionsort 9 am Fahrzeug 1 kann aus der resultierenden Zeit bis zur Berührung abgeleitet werden:

$$p_c(V) = \left( P_x(t_c,V), P_y(t_c,V) \right)$$

Die Einschlagenergie Ec(V) ist proportional zur Ableitung der Trajektorie c, die eine Konstante ist

$$E_c(V) = \begin{cases} c \cdot \dot{P}_x(t_c,V)^2 & \text{if } t_c \text{ exists and } t_c = t_{c,x} \\ c \cdot \dot{P}_y(t_c,V)^2 & \text{if } t_c \text{ exists and } t_c = t_{c,y} \\ 0 & \text{else} \end{cases}$$

Die Einschlagfunktion $I_{nm}(V)$ in Bezug auf das Fahrzeug n und das Objekt m kann eine Funktion sein, die von der Zeit bis zum Kontakt, der Kollisionsort 9 und der Kollisionsenergie abhängen kann.

$$I_{nm}(V) = f\left( t_c(V), p_c(V), E(V) \right)$$

Beispiel für Merkmale dieser Funktion

I(V) = 0 für V: $t_c(V) > t_{thresh}$
I(V) gewichtet mit der Kollisionsposition am Ego-Fahrzeug
I(V) proportional zu E(V)

Die resultierende Einschlagfunktion $I_n(V)$ ist die Summe der einzelnen Einschlagfunktionen $I_{nm}(V)$:

$$I_n(V) = \sum_{m \neq n} I_{nm}(V)$$

Aus der Kollisionskarte, welche durch die resultierende Einschlagfunktion $I_n(V)$ gebildet sein kann, lassen sich die Optimalwerte der Steuerparameter zur Kollisionsminderung ableiten:

$$V_{opt} = \mathrm{argmin}\{I(V)\}$$

Berechnung der Einschlagfunktion für alle Objekte 5 in der Szene und Ableitung optimaler Steuerungsmaßnahmen

$$V_{m,opt} = \mathrm{argmin}\{I_m(V_m)\}, m \neq n$$

Berechnung der Einschlagfunktion für das Fahrzeug 1 unter Verwendung der voraussichtlichen Steueraktionen der Ziele:

$$I_n(V) = \sum_{m \neq n} I_{nm}(V, V_{m,opt})$$

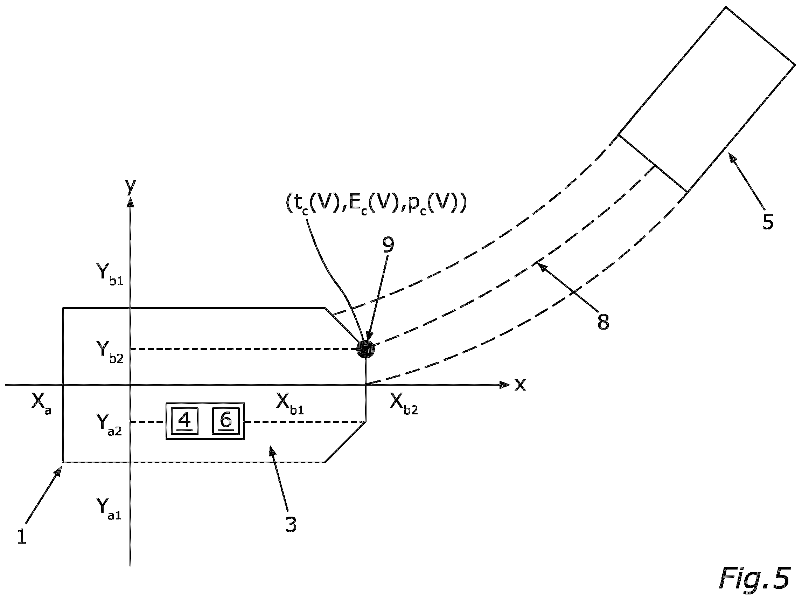

Fig. 5 zeigt eine weitere schematische Darstellung eines Kollisionsorts 9 eines Kollisionsereignisses in Bezug auf das Fahrzeug 1.

Der Kollisionsort 9 welche sich aus der Trajektorie 8 des Objektes 5 ergeben kann, kann unter Verwendung eines polygonalen Modells des Fahrzeugs 1 und des Objektes 5 ermittelt sein.

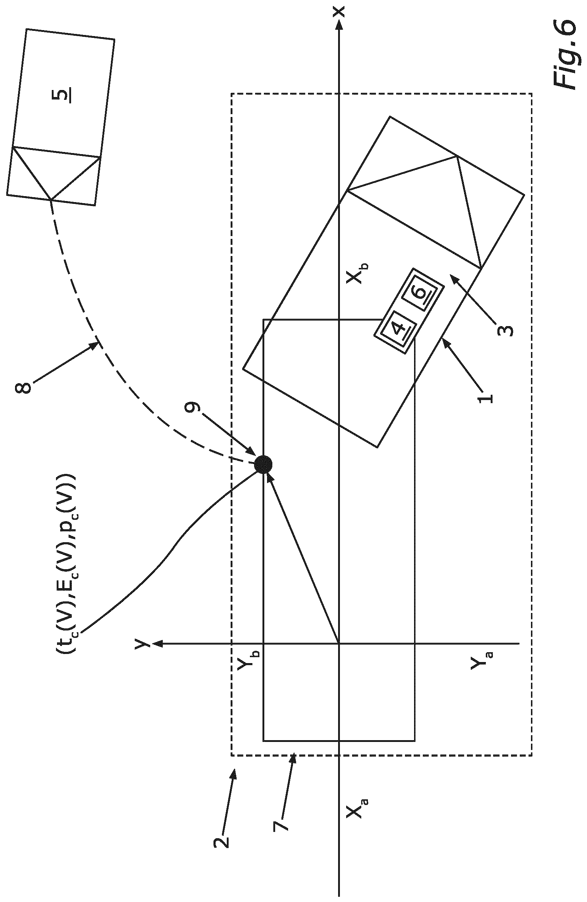

Fig. 6 zeigt eine schematische Darstellung eines Kollisionsorts eines Kollisionsereignisses in Bezug auf einen Anhänger.

Gezeigt ist das Objekt 5, welches die Trajektorie 8 verfolgt, sowie der Kollisionsort 9. Die Kollisionswarnvorrichtung 3 kann auch zur Berücksichtigung eines Anhängers 7 des Fahrzeuggespanns 2 eingerichtet sein. Dabei können analog zur Auswertung des Kollisionsereignisses zwischen dem Fahrzeug 1 und dem Objekt 5 Kollisionsereignisse zwischen dem Anhänger 7 und dem Objekt 5 ermittelt werden. Hierzu können von der Steuereinrichtung 4 Anhängerbewegungsdaten empfangen werden, die eine Bewegung des Anhängers 7 des Fahrzeuggespanns 2 beschreiben. Alternativ können die Anhängerbewegungsdaten durch die Steuereinrichtung 4 aus den Fahrzeugbewegungsdaten ermittelt werden. Die Anhängerbewegungsdaten können auch durch die Sensoreinrichtung 6 der Kollisionswarnvorrichtung 3 ermittelt werden. Um sowohl das prognostizierte Kollisionsereignis des Fahrzeugs 1 als auch das prognostizierte Kollisionsereignis des Anhängers 7 berücksichtigen zu können, können die jeweiligen Einschlagfunktionen des Fahrzeugs 1 und des Anhängers 7 kombiniert werden.

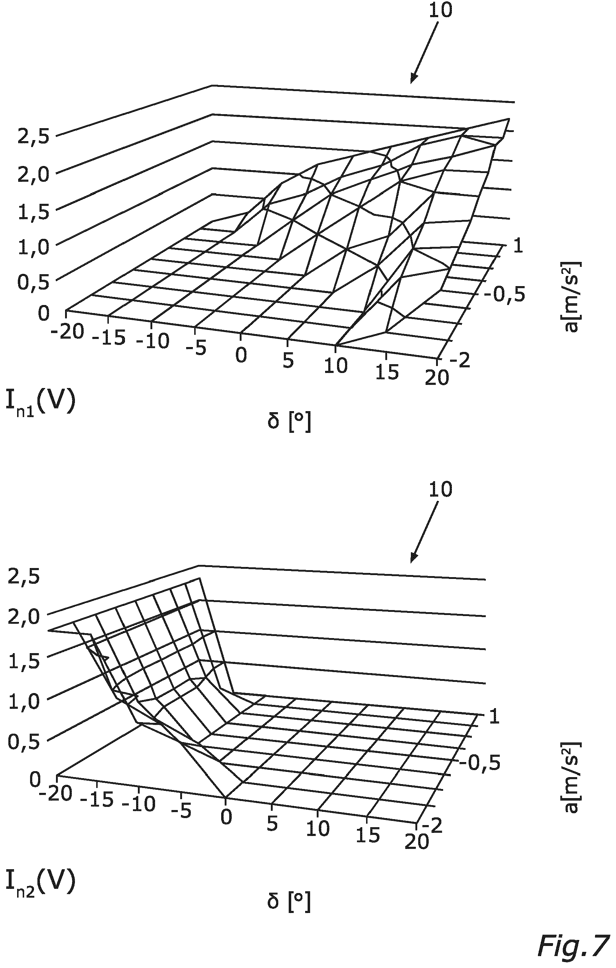

Fig. 7 zeigt eine schematische Darstellung von zwei Einschlagfunktionen.

Die Steuereinrichtung 4 ist dazu eingerichtet, auf Basis der jeweiligen Kollisionswerte des Kollisionsparameters für den Steuerwertebereich eine Einschlagfunktion in Bezug auf das Fahrzeug 1 für das jeweilige Objekt 5 zu ermitteln. Die Einschlagfunktion ordnet den Steuerwerten des Wertebereichs einen jeweiligen Einschlagwert zu, der das prognostizierte Kollisionsereignis zwischen dem Fahrzeug 1 und dem jeweiligen Objekt 5 beschreibt. Der Einschlagwert kann eine Bewertung einer Schwere des prognostizierten Kollisionsereignisses beschreiben. Der Einschlagwert kann aus den jeweiligen Kollisionswerten berechnet werden. Beispielsweise kann vorgesehen werden, dass der Einschlagwert von der Einschlagenergie und der Einschlagposition des Kollisionsereignisses abhängt.

Die Einschlagfunktion kann für jedes der Objekte 5 bestimmt werden. Dabei bezieht sich die Einschlagfunktion nur auf das jeweilige Objekt 5. Um die Ermittlung der Optimalwerte für eine Verkehrssituation zu ermöglichen, kann es erforderlich sein, alle Objekte 5 zu berücksichtigen. Zu diesem Zweck können die jeweiligen Einschlagfunktionen zu einer Gesamteinschlagfunktion zusammengefasst werden. Die Gesamteinschlagfunktion kann beispielsweise durch Addition der jeweiligen Einschlagfunktionen ermittelt werden. Die Steuereinrichtung ist dazu eingerichtet, aus der Gesamteinschlagfunktion des Fahrzeuggespanns nach dem Optimierungsverfahren den optimalen Steuerwert des Steuerparameters zu ermitteln.

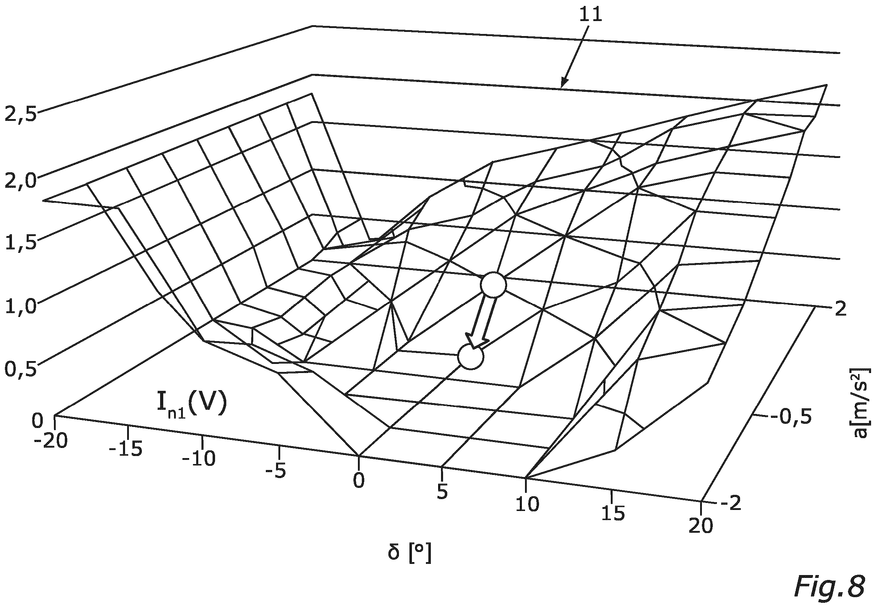

Fig. 8 zeigt eine schematische Darstellung einer resultierenden Gesamteinschlagfunktion.

Zur Vermeidung oder Abschwächung eines Kollisionsereignisses kann die Kollisionswarnvorrichtung 3 dazu eingerichtet sein, in eine Fahrzeugführung einzugreifen, um den optimalen Steuerwert des Steuerparameters einzustellen. Zusätzlich oder alternativ kann vorgesehen sein, dass von der Kollisionswarneinrichtung 3 mittels einer Ausgabeeinrichtung Ausgabesignale an einen Fahrer des Fahrzeugs 1 ausgegeben werden, um diesen zur Einstellung des Optimalwertes anzuleiten.

Die Einschlagfunktion kann aus den Kollisionswerten berechnet werden. Das nächstgelegene Minimum der Einschlagfunktion stellt die optimalen Werte der Steuerparameter des Fahrzeugs 1 zur Minderung der Kollision dar.

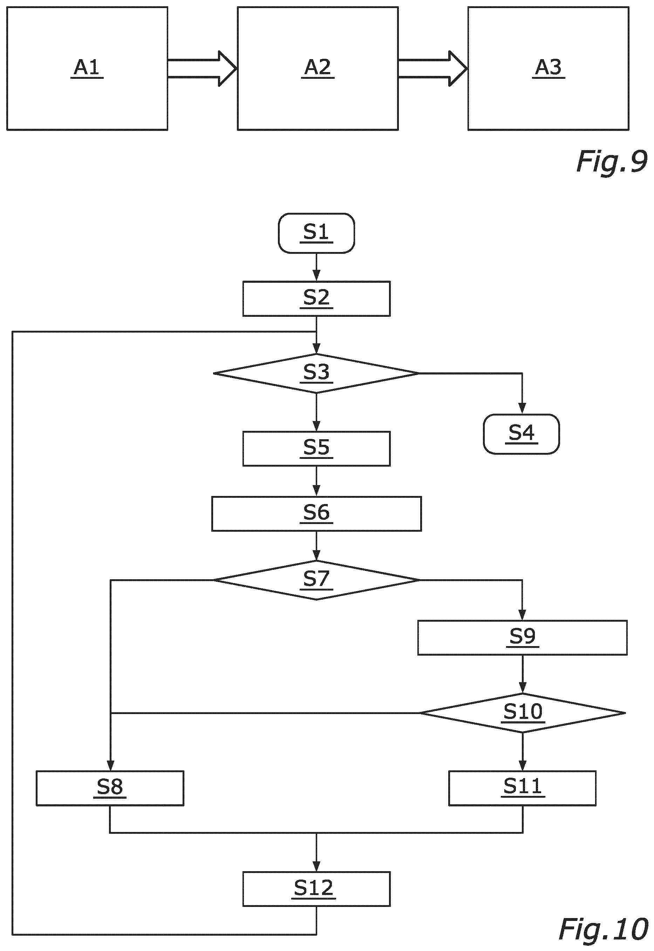

Fig. 9 zeigt eine schematische Darstellung eines Verlaufs eines Verfahrens zum Betreiben einer Kollisionswarnvorrichtung.

Die schematische Darstellung eines Ablaufs zeigt drei Hauptabschnitte des Verfahrens.

Der erste Hauptabschnitt A1 umfasst ein Empfangen von Fahrzeugbewegungsdaten zur Beschreibung der Bewegung des Fahrzeugs 1, von Anhängerbewegungsdaten zur Beschreibung der Bewegung des Anhängers 7 und ein Empfangen von Objektbewegungsdaten zur Beschreibung der Bewegung des Objekts 5 durch die Steuereinrichtung 4. Basierend auf den Bewegungsdaten werden die Bewegungsgleichungen bezüglich des Fahrzeugs 1 ermittelt.

Der zweite Hauptabschnitt A2 des Verfahrens umfasst eine Überprüfung einer Relevanz der jeweiligen Objekte 5 sowie eine Ermittlung von Kollisionswerten der jeweiligen Kollisionsparameter, die ein prognostiziertes Kollisionsereignis beschreiben.

Der dritte Hauptabschnitt A3 des Verfahrens beschreibt eine Ermittlung der jeweiligen Einschlagfunktionen zwischen den Objekten 5 und dem Fahrzeug 1 sowie zwischen den Objekten 5 und dem Anhänger 7. Der Hauptabschnitt umfasst auch eine Ermittlung der Gesamteinschlagfunktion, die sich aus den einzelnen Einschlagfunktionen ergibt.

Der dritte Hauptabschnitt A3 des Verfahrens kann auch Maßnahmen zur Vermeidung des Kollisionsereignisses oder zur Minderung des Kollisionsereignisses umfassen.

Fig. 10 zeigt eine schematische Darstellung eines Verlaufs eines Verfahrens zum Betreiben einer Kollisionswarnvorrichtung.

Zu Beginn des Verfahrens kann in einem Schritt S1 vorgesehen sein, dass eine Gesamteinschlagsfunktion vorgegeben wird, die allen Steuerwerten des Steuerwertebereichs einen Einschlagswert 0 zuordnet.

In einem Schritt S2 kann vorgesehen sein, dass durch die Steuereinrichtung aus Objektbewegungsdaten von Objekten 5 in der Umgebung des Fahrzeuggespanns 2 Bewegungsgleichungen bezüglich des globalen Koordinatensystems ermittelt werden.

In einem Schritt S3 kann es vorgesehen sein, dass durch die Steuereinrichtung 4 überprüft wird, ob ein Paar aus Fahrzeug 1 und Objekt 5 oder aus Anhänger 7 und Objekt 5 bereits ausgewertet wurde.

Liegt kein Paar vor, das noch nicht ausgewertet wurde, kann durch die Steuereinrichtung 4 in einem Schritt S4 das Verfahren beendet werden.

Stellt die Steuereinrichtung fest, dass das jeweilige Paar noch nicht ausgewertet wurde, kann die Bewegungsgleichung des jeweiligen Objektes 5 relativ zum Fahrzeug 1 und/oder relativ zum Anhänger 7 ermittelt werden (S5).

In einem Schritt S6 kann basierend auf der Bewegungsgleichung des Objekts 5 relativ zu dem Fahrzeug eine Zeit ermittelt werden, bei der das Objekt 5 einen minimalen Abstand zu dem Fahrzeug 1 aufweist.

In einem Schritt S7 kann überprüft werden, ob der minimale Abstand zwischen dem Objekt 5 und dem Fahrzeug 1 einen vorgegebenen Mindestabstand unterschreitet.

Ist dies nicht der Fall, kann in einem Schritt S8 der Einschlagwert auf 0 gesetzt werden, da davon ausgegangen werden kann, dass kein Kollisionsereignis eintreten wird.

Für den Fall, dass der Mindestabstand unterschritten wird, wird in einem Schritt S9 eine Kollisionszeit bis zum Eintreten des Kollisionsereignisses zwischen dem Fahrzeug 1 und dem Objekt 5 bestimmt.

In einem Schritt S10 kann das Vorhandensein einer Kollisionszeit überprüft werden.

Für den Fall, dass eine Kollisionszeit ermittelt werden kann und damit ein Kollisionsereignis prognostiziert wird, kann in einem Schritt S11 für einen Steuerwertebereich die Einschlagfunktion relativ zum Fahrzeug 1 für das jeweilige Objekt 5 ermittelt werden.

Für den Fall, dass keine Impulszeit ermittelt werden kann und somit kein Kollisionsereignis prognostiziert wird, kann in Schritt S8 die Einschlagfunktion auf 0 gesetzt werden.

Nach dem Schritt S8 oder dem Schritt S11 kann die Gesamteinschlagfunktion in einem Schritt S12 aktualisiert werden. Dabei kann die vorhandene Gesamteinschlagfunktion durch die objektbezogene Einschlagfunktion ergänzt werden.

In einem nachfolgenden Schritt S12 kann von der Steuereinrichtung 4 überprüft werden, ob sich in der Fahrzeugumgebung ein Objekt 5 befindet, das noch nicht berücksichtigt wurde. Wenn dies der Fall ist, können die vorhergehenden Schritte für das betreffende Objekt 5 wiederholt werden.

Die Verfahrensschritte können in bestimmten Zeitabständen wiederholt werden.

Die Methode beschreibt eine Strategie zur Kollisionsvermeidung und Einschlagminderung, die auf Daten basiert, die von der Sensoreinrichtung 6 oder anderen Eingaben wie V2x-Kommunikation bereitgestellt werden, die Objektdaten wie aktuelle Position und Bewegung sammeln. Der Ansatz unterscheidet sich von bekannten Methoden durch die Vorhersage eines Einschlags als Funktion von Kollisionseigenschaften. Die verwendeten Kollisionseigenschaften können die Zeit bis zur Kollision, die Kollisionsposition am Fahrzeug 1 und die Kollisionsenergie bei einer Kollision zwischen dem Fahrzeug 1 und den beobachteten Objekten 5 umfassen. Ein Vorteil der beschriebenen Strategie ist, dass die Minimierung der Einschlagfunktion bereits direkte Präventions- und Entschärfungssteuermaßnahmen ermöglicht.

Im Gegensatz zu bekannten Algorithmen führt die beschriebene Methode keine komplexe Pfadplanung und Bewertungsberechnung durch, sondern untersucht die tatsächliche Szene auf mögliche drohende Kollisionen und leitet direkt Steuerungsmaßnahmen ab, um eine prognostizierte Kollision des Fahrzeugs 1 zu verhindern oder abzuschwächen. Die Untersuchung der tatsächlichen Szene wird im Koordinatensystem VCS des Fahrzeugs 1 durchgeführt und wendet kleine mögliche Änderungen der seitlichen und / oder longitudinalen Steueraktionen des Fahrzeugs 1 an. Aufgrund der Art dieser Definitionen wird die tatsächlich benötigte Rechenleistung drastisch reduziert. Diese Reduzierung der benötigten Rechenleistung bietet die Möglichkeit, den eigentlichen Algorithmus auf der Kollisionswarnvorrichtung 3 selbst auszuführen.

Die Erfindung bietet einen Algorithmus zur schnellen Kollisionsberechnung, der zu einer Einschlagfunktion im Wertebereich der Steuerparameter führt, die sofort zur Kollisionsvermeidung oder -minderung verwendet werden kann.

Die Erfindung bietet einen Algorithmus zur schnellen Kollisionsberechnung, der direkt für den Steuerwertebereich zur Kollisionsvermeidung oder -abschwächung eingesetzt werden kann. Der Steuerwertebereich kann Steuerwerte von Steuerparametern zur Beeinflussung der Bewegung des Fahrzeugs 1 wie eine Beschleunigung und ein Lenkwinkel oder gleichwertige Merkmale umfassen.

Als Voraussetzung kann davon ausgegangen werden, dass für alle relevanten Objekte 5 in der Verkehrsszene die grundlegenden kinematischen Eigenschaften bekannt sind. Für das Ego-Fahrzeug 1 können diese Eigenschaften geliefert werden durch Sensoren an Bord wie beispielsweise Geschwindigkeits- oder Trägheitssensoren. Für die Überwachung der Bewegungen der Objekte 5 können zusätzliche Sensoren wie LIDAR, RADAR, Ultraschall, Kameras oder andere Quellen verwendet werden.

Das Ziel ist es, aus den kinematischen Eigenschaften des jeweiligen Objekts 5 eine jeweilige so genannte Einschlagfunktion zu ermitteln. Diese Einschlagfunktion ordnet jedem Steuerwert des Steuerwertebereichs einen Einschlagwert zu. Der Einschlagwert beschreibt den vorhergesagten Schweregrad des Einschlags in Abhängigkeit von beispielsweise der Einschlagenergie, dem Einschlagwinkel, dem Einschlagort und/oder der geschätzten Masse des Objekts 5.

Der Algorithmus zur Berechnung einer jeweiligen Einschlagfunktion eines Objektpaares (n,m) umfassend das Fahrzeug und das Objekt besteht aus den folgenden Schritten:
Verwendung parametrischer kinematischer Gleichungen zur Darstellung der Bewegung aller relevanten Objekte 5 der Szene in einem globalen Koordinatensystem RCS darzustellen. Diese kinematischen Eigenschaften T werden gebildet durch Position (Px, Py) und Orientierung R in Abhängigkeit von den Steuerparametern V.

Bestimmung der Relevanz von Objekt 5 durch Prüfung, ob der minimale Abstand $D_{min}(V)$ zwischen dem Objekt 5 und dem Fahrzeug 1 unter einem vorgegebenen Schwellenwert liegt.

Wenn ein Objekt 5 als relevant klassifiziert ist, erfolgt ein Ermitteln der Kollisionsparameter Zeit bis zur Kollision Kollisionsenergie und/oder die Kollisionsposition auf dem Fahrzeug 1 für jedes einzelne Objekt 5 durch Lösen der kinematischen Gleichungen. Zusätzlich kann die Masse der Objekte 5 anhand von Sensorinformationen der Sensoreinrichtung 6 beispielsweise über einen mittels Radar ermittelten Radarquerschnitt des Objektes 5 durch die Steuereinrichtung 4 ermittelt werden.

Anschließend erfolgt eine Generierung der Einschlagfunktion Inm(V) aus den Kollisionsparametern durch Variation der Steuerwerte im Steuerwertebereich. Das Lösen der kinematischen Gleichungen ist nur kostspielig für den ersten Punkt im Steuerwertebereich bei (0,0), dessen Lösung für alle weiteren Variationen genutzt werden kann. Wenn der obige Algorithmus iterativ für jedes Objektpaar angewandt wird, kann die Gesamteinschlagfunktion im Steuerwertebereich In(V) ermittelt werden.

Die resultierende Gesamteinschlagfunktion im Steuerwertebereich kann zur Erkennung, Vermeidung oder Abschwächung einer Kollision verwendet werden. Der Optimalwert der Steuerparameter des Fahrzeugs 1 ist beispielsweise durch den Punkt des Minimalwertes der Gesamteinschlagfunktion 11 gegeben, der den aktuellen Steuerwerten am nächsten liegt.

Der vorgeschlagene Algorithmus ist schnell und führt unmittelbar zu einer Steuerungsausgabe zur Kollisionsvermeidung oder -minderung.

Der Algorithmus kann auf mehrere Objekte 5 gleichzeitig angewendet werden und liefert ein optimales Gesamtergebnis in Bezug auf die Kollisionsvermeidung und - minderung unter Berücksichtigung aller Objekte 5. Die Hauptanwendungen sind schnelle Berechnungen vor einem Zusammenstoß, Kollisionsvermeidung und - abschwächung. Der Ansatz kann auch als Fahrerassistenzsystem, beim autonomen Fahren und bei der Wegplanung nützlich sein.

Darüber hinaus kann das Konzept für mehrere Ego-Fahrzeuge verallgemeinert und in C2C- oder V21-Anwendungen wie z.B. der Kreuzungsüberwachung eingesetzt werden. Die Einschlagfunktion kann auch für Visualisierungszwecke oder Mensch-Maschine-Schnittstellen nützlich sein.

Für jedes Paar von Objekten in der Szene muss die anfängliche Einschlagfunktion bei $\Delta V = 0$ berechnet werden. Diese Berechnung stellt den größten Rechenaufwand dar bedingt durch ein Lösen von Gleichungen.

Für N Objekte ist die Anzahl der Operationen O(N2). Bei Verwendung des Ansatzes der "Variation der Eingaben" ist die Berechnung der vollständigen Einschlagfunktion ($\Delta V \neq 0$) von wesentlich geringerem Rechenaufwand Das Lösen der Gleichungen (z.B. Polynomgleichungen) ist ein numerisches Standardproblem und daher sind hocheffiziente Implementierungen leicht verfügbar

Insgesamt zeigt das Beispiel, wie ein Algorithmus zur Kollisionsvermeidung auf der Grundlage einer Einschlagfunktion im Wertebereich der Kontrollparameter bereitgestellt werden kann.

Bezugszeichenliste

1 Fahrzeug
2 Fahrzeuggespann
3 Kollisionswarnvorrichtung
4 Steuereinrichtung
5 Objekt
6 Sensoreinrichtung
7 Anhänger
8 Trajektorie
9 Kollisionsort
10 Einschlagfunktion
11 Gesamteinschlagfunktion

**Patentansprüche**

1. Kollisionswarnvorrichtung (3), wobei die Kollisionswarnvorrichtung (3) eine Steuereinrichtung (4) umfasst, die dazu eingerichtet ist,

- Fahrzeugbewegungsdaten, die eine Bewegung eines Fahrzeugs (1) eines Fahrzeuggespanns (2) beschreiben zu empfangen, und
- Objektbewegungsdaten zumindest eines Objektes (5) in einer Umgebung des Fahrzeuggespanns (2), die eine Bewegung des zumindest einen Objektes (5) beschreiben, zu empfangen,
**dadurch gekennzeichnet, dass**
die Steuereinrichtung (4) dazu eingerichtet ist,
- basierend auf den Fahrzeugbewegungsdaten eine Bewegungsgleichung zur Beschreibung der Bewegung des Fahrzeugs (1) in Abhängigkeit von einer Zeit und einem aktuellen Steuerwert eines Steuerparameters des Fahrzeugs (1) zu ermitteln,
- basierend auf den Objektbewegungsdaten des zumindest einen Objekts (5) und den Fahrzeugbewegungsdaten eine Bewegungsgleichung zur Beschreibung der Bewegung des jeweiligen zumindest einen Objektes (5) in Bezug auf das Fahrzeug (1) in Abhängigkeit von der Zeit und dem aktuellen Steuerwert des Steuerparameters des Fahrzeugs (1) zu ermitteln,
- basierend auf der Bewegungsgleichung zur Beschreibung der Bewegung des jeweiligen zumindest einen Objektes (5) in Bezug auf das Fahrzeug (1) für den aktuellen Steuerwert des Steuerparameters, eine Erfüllung eines vorbestimmten Relevanzkriteriums durch das jeweilige zumindest eine Objekt (5) zu überprüfen,
- bei einer Erfüllung des Relevanzkriteriums, basierend auf der Bewegungsgleichung für Steuerwerte eines vorgegebenen Steuerwertebereichs, jeweilige Kollisionswerte eines Kollisionsparameters, betreffend ein prognostiziertes Kollisionsereignis zwischen dem Fahrzeug (1) und dem jeweiligen zumindest einen Objekt (5) zu ermitteln,
- basierend auf den jeweiligen Kollisionswerten des Kollisionsparameters für den Steuerwertebereich eine Einschlagfunktion (10) in Bezug auf das Fahrzeug (1) für das jeweilige zumindest eine Objekt (5) zu ermitteln, welche den Steuerwerten des Steuerwertebereichs einen Einschlagswert betreffend das prognostizierte Kollisionsereignis zwischen dem Fahrzeug (1) und dem jeweiligen zumindest einen Objekt (5) zuweist,
- aus der jeweiligen Einschlagfunktionen (10) in Bezug auf das Fahrzeug (1) für das zumindest eine Objekt (5) eine Gesamteinschlagfunktion (11) des Fahrzeuggespanns (2) zu ermitteln, und
- aus der Gesamteinschlagfunktion (11) des Fahrzeuggespanns (2) nach einem Optimierungsverfahren einen optimalen Steuerwert des Steuerparameters zu ermitteln.

2. Kollisionswarnvorrichtung (3) nach Anspruch 1,

**dadurch gekennzeichnet, dass**

die Steuereinrichtung (4) dazu eingerichtet ist,

- Anhängerbewegungsdaten, die eine Bewegung eines Anhängers (7) des Fahrzeuggespanns (2) beschreiben zu empfangen und/oder die Anhängerbewegungsdaten aus den Fahrzeugbewegungsdaten zu ermitteln,
- basierend auf den Anhängerbewegungsdaten eine Bewegungsgleichung zur Beschreibung der Bewegung des Anhängers (7) in Abhängigkeit von der Zeit und dem aktuellen Steuerwert des Steuerparameters des Fahrzeugs (1) zu ermitteln,
- basierend auf den Objektbewegungsdaten des zumindest einen Objekts (5) und den Anhängerbewegungsdaten eine Bewegungsgleichung zur Beschreibung der Bewegung des jeweiligen zumindest einen Objektes (5) in Bezug auf den Anhänger (7) in Abhängigkeit von der Zeit und dem aktuellen Steuerwert des Steuerparameters des Fahrzeugs (1) zu ermitteln,
- bei einer Erfüllung des Relevanzkriteriums, für die Steuerwerte des vorgegebenen Steuerwertebereichs, jeweilige Kollisionswerte des Kollisionsparameters, betreffend ein prognostiziertes Kollisionsereignis zwischen dem Anhänger (7) und dem jeweiligen zumindest einen Objekt (5) zu ermitteln,
- basierend auf den jeweiligen Kollisionswerten des Kollisionsparameters für den Steuerwertebereich eine Einschlagfunktion (10) in Bezug auf den Anhänger (7) für das jeweilige zumindest eine Objekt (5) zu ermitteln, welche den Steuerwerten des Steuerwertebereichs einen Einschlagswert betreffend das prognostizierte Kollisionsereignis zwischen dem Anhänger (7) und dem jeweiligen zumindest einen Objekt (5) zuweist, und
- aus der jeweiligen Einschlagfunktion (10) in Bezug auf das Fahrzeug (1) des zumindest einen Objekts (5) und der jeweiligen Einschlagfunktion (10) in Bezug auf den Anhänger (7) des zumindest einen Objekts (5) die Gesamteinschlagfunktion (11) des Fahrzeuggespanns (2) zu ermitteln.

3. Kollisionswarnvorrichtung (3) nach Anspruch 1 oder 2,
   **dadurch gekennzeichnet, dass**
   das vorbestimmten Relevanzkriterium eine Unterschreitung eines vorgegebenen Mindestabstands durch einen prognostizierten minimalen Abstand zwischen dem Fahrzeug (1) und dem Objekt (5) umfasst.

4. Kollisionswarnvorrichtung (3) nach einem der vorhergehenden Ansprüche,
   **dadurch gekennzeichnet, dass**
   der Kollisionsparameter eine Dauer bis zu dem Kollisionsereignis umfasst.

5. Kollisionswarnvorrichtung (3) nach einem der vorhergehenden Ansprüche,
   **dadurch gekennzeichnet, dass**
   der Kollisionsparameter einen Kollisionsort des Kollisionsereignisses in Bezug auf das Fahrzeuggespann (2) umfasst.

6. Kollisionswarnvorrichtung (3) nach einem der vorhergehenden Ansprüche,
   **dadurch gekennzeichnet, dass**
   der Kollisionsparameter eine Kollisionsenergie des Kollisionsereignisses umfasst.

7. Kollisionswarnvorrichtung (3) nach einem der vorhergehenden Ansprüche,
   **dadurch gekennzeichnet, dass**
   die Steuereinrichtung (4) dazu eingerichtet ist, das Fahrzeug (1) zum Einstellen des optimalen Steuerwerts des Steuerparameters anzusteuern.

8. Kollisionswarnvorrichtung (3) nach einem der vorhergehenden Ansprüche,
   **dadurch gekennzeichnet, dass**
   der Steuerparameter einen Lenkwinkel und/oder eine Beschleunigung umfasst.

9. Kollisionswarnvorrichtung (3) nach einem der vorhergehenden Ansprüche,
   **dadurch gekennzeichnet, dass**
   die Steuereinrichtung (4) dazu eingerichtet ist, eine Ausgabeeinrichtung zum Ausgeben von Ausgabesignalen zum Anleiten eines Fahrers des Fahrzeugs (1) zum Einstellen des optimalen Steuerwerts des Steuerparameters anzusteuern.

10. Kollisionswarnvorrichtung (3) nach einem der vorhergehenden Ansprüche,
    **dadurch gekennzeichnet, dass**

die Kollisionswarnvorrichtung (3) eine Sensoreinrichtung (6) umfasst, die dazu eingerichtet ist, das zumindest eine Objekt (5) in einer Umgebung des Fahrzeuggespanns (2) zu erfassen und die Objektbewegungsdaten an die Steuereinrichtung (4) zu versenden.

11. Kollisionswarnvorrichtung (3) nach einem der vorhergehenden Ansprüche,
**dadurch gekennzeichnet, dass**
der Kollisionswert des Kollisionsparameters mittels polygonaler Modellierung des Objekts (5) und/oder des Fahrzeuggespanns (2) ermittelt wird.

12. Fahrzeug (1) umfassend eine Kollisionswarnvorrichtung (3) nach einem der vorhergehenden Ansprüche.

13. Verfahren zum Betreiben einer Kollisionswarnvorrichtung (3), umfassend die folgenden durch eine Steuereinrichtung (4) der Kollisionswarnvorrichtung (3) durchgeführten Schritte:

- Empfangen von Fahrzeugbewegungsdaten, die eine Bewegung eines Fahrzeugs (1) eines Fahrzeuggespanns (2) beschreiben,
- Empfangen von Objektbewegungsdaten zumindest eines Objektes (5) in einer Umgebung des Fahrzeuggespanns (2), die eine Bewegung des zumindest einen Objektes (5) beschreiben,
- Ermitteln einer Bewegungsgleichung zur Beschreibung der Bewegung des Fahrzeugs (1) in Abhängigkeit von einer Zeit und einem aktuellen Steuerwert eines Steuerparameters des Fahrzeugs (1) basierend auf den Fahrzeugbewegungsdaten,
- ermitteln einer Bewegungsgleichung zur Beschreibung der Bewegung des jeweiligen zumindest einen Objektes (5) in Bezug auf das Fahrzeug (1) in Abhängigkeit von der Zeit und dem aktuellen Steuerwert des Steuerparameters des Fahrzeugs (1) basierend auf den Objektbewegungsdaten des zumindest einen Objekts (5) und den Fahrzeugbewegungsdaten,
- überprüfen einer Erfüllung eines vorbestimmten Relevanzkriteriums durch das jeweilige zumindest eine Objekt (5) basierend auf der Bewegungsgleichung zur Beschreibung der Bewegung des jeweiligen zumindest einen Objektes (5) in Bezug auf das Fahrzeug (1) für den aktuellen Steuerwert des Steuerparameters,
- bei einer Erfüllung des Relevanzkriteriums, ermitteln jeweiliger Kollisionswerte eines Kollisionsparameters, betreffend ein prognostiziertes Kollisionsereignis zwischen dem Fahrzeug (1) und dem jeweiligen zumindest einen Objekt (5), basierend auf der Bewegungsgleichung für Steuerwerte eines vorgegebenen Steuerwertebereichs,
- ermitteln einer Einschlagfunktion (10) in Bezug auf das Fahrzeug (1) für das jeweilige zumindest eine Objekt (5) basierend auf den jeweiligen Kollisionswerten des Kollisionsparameters für den Steuerwertebereich, welche den Steuerwerten des Steuerwertebereichs einen Einschlagswert betreffend das prognostizierte Kollisionsereignis zwischen dem Fahrzeug (1) und dem jeweiligen zumindest einen Objekt (5) zuweist,
- ermitteln einer Gesamteinschlagfunktion (11) des Fahrzeuggespanns (2) aus der jeweiligen Einschlagfunktion (10) in Bezug auf das Fahrzeug (1) für das zumindest eine Objekt (5), und
- ermitteln eines optimalen Steuerwerts des Steuerparameters aus der Gesamteinschlagfunktion (11) des Fahrzeuggespanns (2) nach einem Optimierungsverfahren.

14. Computerprogramm, umfassend Befehle, die bewirken, dass die Kollisionswarnvorrichtung (3) nach zumindest einem der Ansprüche 1 bis 11 die Verfahrensschritte nach Anspruch 13 ausführt.

15. Computerlesbares Medium, auf dem das Computerprogramm nach Anspruch 14 gespeichert ist.

Fig.1

Fig.2

EP 4 635 814 A1

*Fig.3*

*Fig.4*

*Fig.5*

Fig.6

$I_{n1}(V)$

$\delta\ [°]$

$I_{n2}(V)$

$\delta\ [°]$

*Fig.7*

Fig.8

EP 4 635 814 A1

Fig.9

Fig.10

Nummer der Anmeldung

EP 25 16 7609

### Europäisches Patentamt / European Patent Office / Office européen des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2005 023832 A1 (DAIMLER CHRYSLER AG [DE]) 30. November 2006 (2006-11-30) | 1,3-15 | INV. B60W30/095 B60W50/14 |
| A | * Absätze [0033] - [0038], [0044] - [0070] * | 2 | |
| | ----- | | |
| A | DE 10 2008 005310 A1 (BAYERISCHE MOTOREN WERKE AG [DE]) 23. Juli 2009 (2009-07-23) * Absätze [0058] - [0062] * | 1-15 | |
| | ----- | | |
| A | DE 10 2021 213575 A1 (CONTINENTAL AUTONOMOUS MOBILITY GERMANY GMBH [DE]) 1. Juni 2023 (2023-06-01) * Absätze [0014] - [0021] * | 1-15 | |
| | ----- | | |

**RECHERCHIERTE SACHGEBIETE (IPC)**

B60W

Der vorliegende Recherchenbericht wurde für alle Patentansprüche erstellt

| Recherchenort | Abschlußdatum der Recherche | Prüfer |
|---|---|---|
| München | 18. August 2025 | Müller-Nagy, Andrea |

## ANHANG ZUM EUROPÄISCHEN RECHERCHENBERICHT
## ÜBER DIE EUROPÄISCHE PATENTANMELDUNG NR.

EP 25 16 7609

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-08-2025

| Im Recherchenbericht angeführtes Patentdokument | Datum der Veröffentlichung | Mitglied(er) der Patentfamilie | Datum der Veröffentlichung |
|---|---|---|---|
| DE 102005023832 A1 | 30-11-2006 | DE 102005023832 A1 | 30-11-2006 |
|  |  | WO 2006125560 A1 | 30-11-2006 |
| DE 102008005310 A1 | 23-07-2009 | DE 102008005310 A1 | 23-07-2009 |
|  |  | WO 2009092374 A1 | 30-07-2009 |
| DE 102021213575 A1 | 01-06-2023 | KEINE |  |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080065328 A1